# EUROPEAN PATENT APPLICATION

(11) **EP 4 535 691 A1**
(43) Date of publication of application: **09.04.2025**
(21) Application number: 23827471.6
(22) Date of filing: 19.06.2023
(51) Int. Cl.: H04B 17/373, H04B 17/309, H04W 16/28, H04L 25/02, H04L 5/00, H04W 72/21, H04W 88/08, H04W 92/20

(54) **DEVICE AND METHOD FOR FRONTHAUL TRANSMISSION IN WIRELESS COMMUNICATION SYSTEM**

(30) Priority: 23.06.2022 KR 20220076874; 28.06.2022 KR 20220079073
(71) Applicant: Samsung Electronics Co., Ltd., Suwon-si, Gyeonggi-do 16677 (KR)
(72) Inventor: CHOI, Yongyun, Suwon-si Gyeonggi-do 16677 (KR); MIN, Kyungsik, Suwon-si Gyeonggi-do 16677 (KR); HAN, Seongbae, Suwon-si Gyeonggi-do 16677 (KR)
(74) Representative: HGF
(86) International application number: PCT/KR2023/008471
(87) International publication number: WO 2023/249356

(57) **Abstract**

The present disclosure relates to a 5G or 6G communication system for supporting higher data transmission rates. According to various embodiment disclosed herein, a method performed in a wireless communication system by a distributed unit (DU) comprises the steps of: receiving a sounding reference signal (SRS) for channel estimation from a terminal; on the basis of the received SRS, generating information on a channel prediction performed by a radio unit (RU); and transmitting a control message including the generated information on the channel prediction to the RU through a control plane (C-plane), wherein the information on the channel prediction includes an index of the terminal and information on the SRS.

## Description

### [Technical Field]

The disclosure relates generally to a wireless communication system and, more particularly, to device and a method for fronthaul transmission in a wireless communication system.

### [Background Art]

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multi antenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

In line with the increasing amount of transmission in wireless communication systems, a function split is applied such that the base station is functionally split. According to the function split, the base station may be split into a digital unit (DU) and a radio unit (RU), a fronthaul is defined for communication between the DU and the RU, and transmission through the fronthaul is requested.

### [Disclosure of Invention]

### [Technical Problem]

Based on the above-described discussion, the disclosure provides a method and a device for composing a message transmitted through a fronthaul interface.

In addition, the disclosure provides a method and a device configured such that, when operating a digital unit (DU) and a radio unit (RU) in a wireless communication system, channel prediction in the RU is effectively performed.

### [Solution to Problem]

According to various embodiments of the disclosure, a method performed by a distributed unit (DU) in a wireless communication system may include: receiving a sounding reference signal (SRS) for channel estimation from a terminal; generating information on a channel prediction performed by a radio unit (RU), based on the received SRS; and transmitting a control message including the generated information on the channel prediction to the RU through a control plane (C-plane). The information on the channel prediction may include an index of the terminal and information on the SRS.

According to various embodiments of the disclosure, a method performed by a radio unit (RU) in a wireless communication system may include: receiving a control message including information on a channel prediction generated based on a sounding reference signal (SRS) from a distributed unit (DU) through a control plane (C-plane); performing channel prediction, based on the information on the channel prediction; and identifying a beamforming weight associated with a terminal, based on the channel prediction result. The information on the channel prediction may include an index of the terminal and information on the SRS.

According to various embodiments of the disclosure, a distributed unit (DU) in a wireless communication system may include at least one transceiver and at least one processor functionally coupled to the at least one transceiver. The at least one processor may be configured to: receive a sounding reference signal (SRS) for channel estimation from a terminal; generate information regarding channel prediction performed by a radio unit (RU), based on the received SRS; and transmit a control message including the generated information on a channel prediction to the RU through a control plane (C-plane). The information on the channel prediction may include an index of the terminal and information on the SRS.

According to various embodiments of the disclosure, a radio unit (RU) in a wireless communication system may include at least one transceiver and at least one processor functionally coupled to the at least one transceiver. The at least one processor may be configured to: receive a control message including information on a channel prediction generated based on a sounding reference signal (SRS) from a distributed unit (DU) through a control plane (C-plane); perform channel prediction, based on the information on the channel prediction; and identify a beamforming weight associated with a terminal, based on the channel prediction result. The information on the channel prediction may include an index of the terminal and information on the SRS.

### [Advantageous Effects of Invention]

A method and a device according to various embodiments of the disclosure have a parameter for channel prediction included in a control message transmitted through the fronthaul such that downlink (DL) channel estimation based on a sounding reference signal (SRS) can be operated effectively.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

FIG. 1A illustrates a wireless communication system according to various embodiments of the disclosure.
FIG. 1B illustrates an example of a fronthaul structure based on functional split of a base station according to various embodiments of the disclosure.
FIG. 2 illustrates the configuration of a distributed unit (DU) according to various embodiments of the disclosure.
FIG. 3 illustrates the configuration of a radio unit (RU) according to various embodiments of the disclosure.
FIG. 4 illustrates an example of function split according to various embodiments of the disclosure.
FIG. 5 illustrates an example of connection between a DU and an RU according to various embodiments of the disclosure.
FIG. 6 illustrates an example of channel estimation based on a sounding reference signal (SRS) according to various embodiments of the disclosure.
FIG. 7 illustrates an example of message transmission for channel prediction between an O-DU and an O-RU according to various embodiments of the disclosure.
FIG. 8 illustrates an example of a frame format for channel prediction of a control message according to various embodiments of the disclosure.
FIG. 9 illustrates an example of parameter information included in a frame format of a control message according to various embodiments of the disclosure.
FIG. 10 illustrates an example of a management-plane (M-plane) information parameter according to various embodiments of the disclosure.
FIG. 11 illustrates a flow of operations of a distributed unit (DU) for transmitting a control message related to channel prediction according to various embodiments of the disclosure.
FIG. 12 illustrates a flow of operations of a radio unit (RU) which generates a beamforming weight, based on channel prediction, according to various embodiments of the disclosure.
FIG. 13 illustrates a flow of signals form performing channel prediction according to various embodiments of the disclosure.

### [Mode for Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description, terms referring to signals (e.g., message, information, preamble, signal, signaling, sequence, and stream), terms referring to resources (e.g., symbol, slot, subframe, radio frame, subcarrier, resource element (RE), resource block (RB), physical resource block (PRB), bandwidth part (BWP), and occasion), terms referring to arithmetic operation states (e.g., step, operation, and procedure), terms referring to data (e.g., packet, user stream, information, bit, symbol, and codeword), terms referring to channels, terms referring to control information (e.g., downlink control information (DCI), medium access control control element (MAC CE), and radio resource control (RRC) signaling), terms referring to network entities, terms referring to device elements, and the like are illustratively used for the sake of descriptive convenience. Therefore, the disclosure is not limited by the terms as described below, and other terms referring to subjects having equivalent technical meanings may be used.

Furthermore, as used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

Furthermore, various embodiments of the disclosure will be described using terms employed in some communication standards (e.g., the 3rd generation partnership project (3GPP), the extensible radio access network (xRAN), and the open-radio access network (O-RAN)), but they are for illustrative purposes only. Various embodiments of the disclosure may be easily applied to other communication systems through modifications.

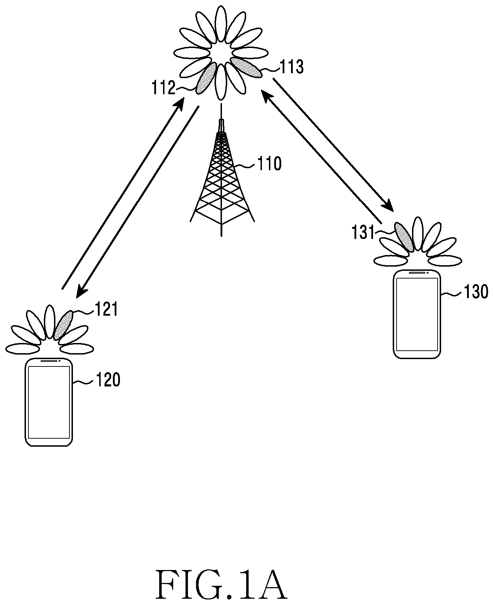

FIG. 1A illustrates a wireless communication system according to various embodiments of the disclosure. FIG. 1A illustrates an example of a base station 110, a UE 120, and a UE 130 as a part of nodes that use radio channels in a wireless communication system. Although FIG. 1A illustrates only one base station, other base stations identical to or different from the base station 110 may be further included.

The base station 110 is a network infrastructure configured to provide a wireless connection to the UEs 120 and 130. The base station 110 has a coverage which is defined as a predetermined geographical region based on the distance to which signals can be transmitted. The base station 110 may be also be referred to as "access point (AP)", "eNodeB (eNB)", "5th generation node (5G node)", "next generation nodeB (gNB)", "wireless point", "transmission/reception point (TRP)", or other terms having equivalent technical meanings, in addition to "base station".

Each of the UE 120 and the UE 130 refers to a device used by a user to perform communication with the base station 110 through a radio channel. A link directed from the base station 110 to the UE 120 or the UE 130 is referred to as a downlink (DL), and a link directed from the UE 120 or the UE 130 to the base station 110 is referred to as an uplink (UL). In addition, the UE 120 and the UE 130 may communicate with each other through a radio channel. A link between the UE 120 and the UE 130 (device-to-device link (D2D)) is referred to as a sidelink, which may be used interchangeably with "PC5 interface". In some cases, at least one of the UE 120 and the UE 130 may be operated without the user's intervention. That is, at least one of the UE 120 and the UE 130 may be a device configured to perform machine type communication (MTC) without being carried by the user. Each of the UE 120 and the UE 130 may also referred to as "terminal", "mobile station", "subscriber station", "remote terminal", "wireless terminal", "user device", or other terms having equivalent technical meanings, in addition to "user equipment (UE)".

The base station 110, the UE 120, and the UE 130 may perform beamforming. The base station and the UEs may transmit and receive radio signals in a relatively low frequency band (for example, frequency range 1 (FR1) of NR). In addition, base station and the UEs may transmit and receive radio signals in a relatively high frequency band (for example, FR2 of NR, mmWave band (for example, 28GHz, 30GHz, 38GHz, 60GHz)). In some embodiments, the base station 110 may communicate with the UE 120 within a frequency range corresponding to FR1. In some embodiments, the base station 110 may communicate with the UE 120 within a frequency range corresponding to FR2. The base station 110, the UE 120, and the UE 130 may perform beamforming in order to improve channel gain. Beamforming, as used herein, may include transmission beamforming and reception beamforming. That is, the base station 110, the UE 120, and the UE 130 may assign directivity to transmitted or received signals. To this end, the base station 110 and the UEs 120 and 130 may select serving beams 112, 113, 121, and 131 through a beam search or beam management procedure. After the serving beams 112, 113, 121, and 131 are selected, subsequent communication may be performed through resources having a quasi co-located (QCL) relation with resources used to transmit the serving beams 112, 113, 121, and 131.

If large-scale characteristics of a channel used to transfer a symbol on a first antenna port can be inferred from a channel used to transfer a symbol on a second antenna port, the first and second antenna ports may be assessed as having a QCL relation. For example, the large-scale characteristics may include at least one of delay spread, Doppler spread, Doppler shift, average gain, average delay, and spatial receiver parameter.

Although the base station and the UEs are all illustrated in FIG. 1A as performing beamforming, various embodiments of the disclosure are not necessarily limited thereto. In some embodiments, the UEs may or may not perform beamforming. In addition, the base station may or may not perform beamforming. That is, only one of the base station and the UE may perform beamforming, or none of the base station and the UE may perform beamforming.

In the disclosure, a beam refers to a spatial flow of signals through a radio channel, and is formed by one or more antennas (or antenna elements), and such a process of formation may be referred to as beamforming. Beamforming may include analog beamforming and digital beamforming (for example, precoding). Examples of a reference signal transmitted based on beamforming may include a demodulation-reference signal (DM-RS), a channel state information-reference signal (CSI-RS), a synchronization signal/physical broadcast channel (SS/PBCH), and a sounding reference signal (SRS). In addition, as a configuration regarding each reference signal, an IE such as a CSI-RS resource or SRS-resource may be used, and such a configuration may include information associated with a beam. The information associated with a beam may indicate whether the corresponding configuration (for example, CSI-RS resource) uses the same spatial domain filter with another configuration (for example, another CSI-RS resource in the same CSI-RS resource set) or uses a different spatial domain filter, or with which reference signal the corresponding configuration is quasi-co-located (QCLed), or in which type (for example, QCL type A, B, C, or D) if QCLed.

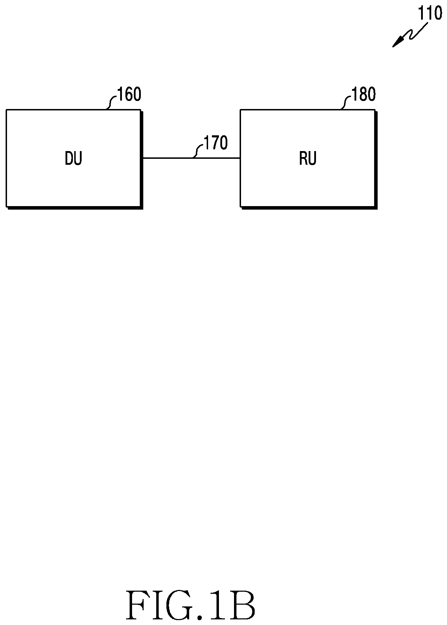

Conventionally, in a communication system having a relatively large cell radius of base stations, each base station is installed such that each base station includes functions of a digital processing unit (or digital unit (DU)) and a radio frequency (RF) processing unit (or radio unit (RU)). However, 4^{th} generation (4G) and/or later communication systems use high frequency bands, and the cell radius of base station are reduced, thereby increasing the number of base stations for covering a specific region, and increasing the burden on operators who need to install more base stations. In order to minimize the cost for installing base stations, a structure has been proposed such that the DU and RU of a base station are split such that one or more RUs are connected to one DU through a wired network, and one or more RUs are disposed to be distributed geographically in order to cover a specific region. Hereinafter, examples in which a base station is disposed and expanded according to various embodiments of the disclosure will be described with reference to FIG. 1B.

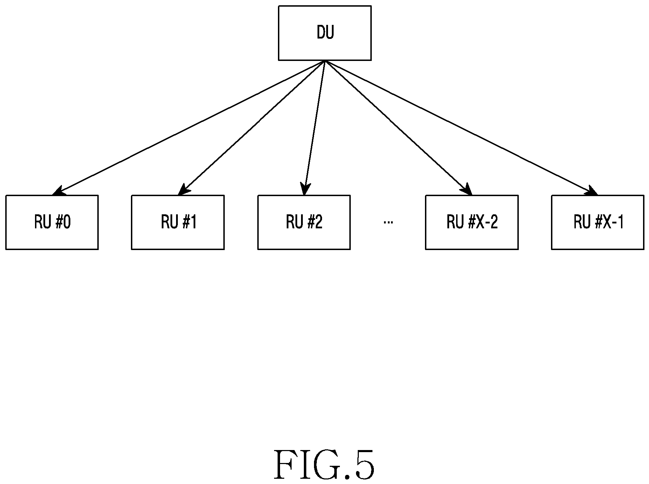

FIG. 1B illustrates an example of a fronthaul structure based on functional split of a base station according to various embodiments of the disclosure. The fronthaul refers to a portion between entities between a wireless LAN and a base station, unlike the backhaul between core networks in a base station. Although a DU and a RU are illustrated in FIG. 1B, the UD and RU may, without being limited thereto, refer to an O-DU and O-RU, respectively, which are terms based on O-RAN specifications, according to various embodiments of the disclosure, and the above-described terms may be used interchangeably. Although FIG. 1B illustrates an example of a fronthaul structure between a DU 160 and one RU 180, this is only for convenience of description, and the disclosure is not limited thereto. In other words, embodiments of the disclosure may also be applied to a fronthaul structure between one O-DU and multiple O-RUs as in FIG. 5. For example, embodiments of the disclosure may be applied to a fronthaul structure between one O-DU and two O-RUs. In addition, embodiments of the disclosure may be applied to a fronthaul structure between one O-DU and three O-RUs.

Referring to FIG. 1B, the base station 110 may include a DU 160 and an RU 180. The fronthaul 170 between the DU 160 and the RU 180 may be operated through an Fx interface. In order to operate the fronthaul 170, various fronthaul interfaces defined in specifications (for example, enhanced common public radio interface (eCPRI), radio over ethernet (ROE)) may be used.

Mobile data traffic has increased in line with developing communication technologies, and the amount of bandwidths required in the fronthaul between a digital unit and a radio unit has accordingly increased substantially. In a disposition such as a centralized/cloud radio access network (C-RAN), the DU may be implemented to perform functions regarding the packet data convergence protocol (PDCP), radio link control (RLC), media access control (MAC), and physical (PHY), and the RU may be implemented to perform more functions regarding the PHY layer in addition to the radio frequency (RF) function.

The DU 160 may handle upper layer functions of a radio network. For example, the DU 160 may perform functions of the MAC layer or a part of the PHY layer. As used herein, a part of the PHY layer is performed in higher steps among functions of the PHY layer, and may include, for example, channel encoding (or channel decoding), scrambling (or descrambling), modulation (or demodulation), layer mapping (or layer demapping). According to an embodiment, The DU 160 may be referred to as an O-DU (O-RAN DU) when following O-RAN specifications. The DU 160 may instead be referred to as a first network entity for a base station (for example, gNB) in embodiments of the disclosure, if necessary.

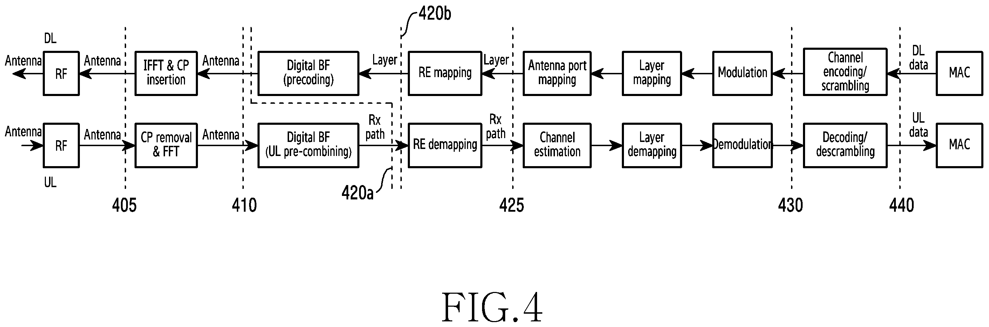

The RU 180 may handle lower layer functions of a radio network. For example, the RU 180 may perform a part of the PHY layer or RF functions. As used herein, a part of the PHY layer is performed in steps relatively lower than the DU 160, among functions of the PHY layer, and may include, for example, IFFT transform (or FFT transform), CP insertion (CP removal), digital beamforming. An example of such a specific function split will be described in detail with reference to FIG. 4. The RU 180 may be referred to as "access unit (AU)", "access point (AP)", "transmission/reception point (TRP)", "remote radio head (RRH)", "radio unit (RU)", or other terms having equivalent technical meanings. According to an embodiment, The RU 180 may be referred to as an O-RU (O-RAN RU) when following O-RAN specifications. The DU 160 may instead be referred to as a second network entity for a base station (for example, gNB) in embodiments of the disclosure, if necessary.

Although it is assumed in the description with reference to FIG. 1B that the base station includes a DU and an RU, various embodiments of the disclosure are not limited thereto. In some embodiments, the base station may be implemented in a distributed deployment, based on a centralized unit (CU) configured to perform functions of upper layers of (for example, packet data convergence protocol (PDCP), RRC) of an access network and a distributed unit (DU) configured to perform functions of lower layers. The distributed unit (DU) may include the digital unit (DU) and the radio unit (RU) in FIG. 1B. A structure may be implemented such that, between a core (for example, 5G core (5GC) or next generation core (NGC)) network and a radio network (RAN), the base station is deployed in the order of CU, DU, and RU. The interface between the CU and the distributed unit (DU) may be referred to as an F1 interface.

The centralized unit (CU) may be connected to one or more DUs so as to handle functions of higher layers than the DUs. For example, the CU may handle functions of radio resource control (RRC) and packet data convergence protocol (PDCP) layers, and the DU and RU may handle functions of lower layers. The DU may perform some functions (high PHY) of radio link control (RLC), media access control (MAC), and physical (PHY) layers, and the RU may handle remaining functions (low PHY) functions of the PHY layer. In addition, as an example, the digital unit (DU) may be included in the distributed unit (DU) as the base station is implemented in a distributed deployment. Hereinafter, in the disclosure, a digital unit (DU) may be understood as being identical to a distributed unit (DU) including no RU, for convenience of description. In addition, the digital unit (DU) (or distributed unit (DU)) may be understood as being identical to an O-RAN digital unit (O-DU) or O-RAN distributed unit (O-DU).

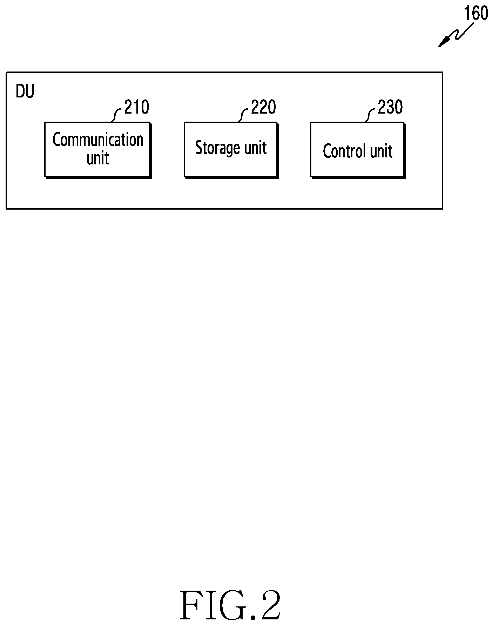

FIG. 2 illustrates the configuration of a distributed unit (DU) in a wireless communication system according to various embodiments of the disclosure. The exemplary configuration illustrated in FIG. 2 may be understood as the configuration of the DU 160 in FIG. 1B, as a part of the base station. As used herein, the term "... unit", "-er", or the like refers to a unit configured to process at least one function or operation, and may be implemented as hardware, software, or a combination of hardware and software.

Referring to FIG. 2, the DU 160 includes a communication unit 210, a storage unit 220, and a control unit 230.

The communication unit 210 may perform functions for transmitting/receiving signals in a wired communication environment. The communication unit 210 may include a wired interface for a direct connection between devices through a transmission medium (for example, copper wire or optical fiber). For example, the communication unit 210 may transfer electric signals to another device through a coper wire, or may perform conversion between electric signals and optical signals. The communication unit 210 may be connected to a radio unit (RU). The communication unit 210 may be connected to a core network or connected to a CU having a distributed deployment.

The communication unit 210 may perform functions for transmitting/receiving signals in a wireless communication environment. For example, communication unit 210 may perform functions for conversion between baseband signals and bitstrings according to the system's physical layer specifications. For example, during data transmission, the communication unit 210 encodes and modulates a transmitted bitstring, thereby generating complex symbols. In addition, during data reception, the communication unit 210 demodulates and decodes a baseband signal, thereby restoring a received bitstring. In addition, the communication unit 210 may include multiple transmission/reception paths. In addition, according to an embodiment, the communication unit 210 may be connected to the core network or to other nodes (for example, integrated access backhaul (IAB)).

The communication unit 210 may transmit/receive signals. To this end, the communication unit 210 may include at least one transceiver. For example, the communication unit 210 may transmit a synchronization signal, a reference signal, system information, a message, a control message, a stream, control information, data, or the like. In addition, the communication unit 210 may perform beamforming.

The communication unit 210 transmits and receives signals as described above. Accordingly, all or part of the communication unit 210 may be referred to as "transmission unit", "reception unit", or "transmission/reception unit". In addition, in the following description, transmission and reception performed through a radio channel are interpreted as including the above-described processing performed by the communication unit 210.

Although not illustrated in FIG. 2, the communication unit 210 may further include a backhaul communication unit to be connected to the core network or other base stations. The backhaul communication unit provides an interface for communicating with other nodes in the network. That is, the backhaul communication unit converts bitstrings transmitted from the base station to other nodes, for example, other access nodes, other base stations, upper nodes, core networks, or the like to physical signals, and convers physical signals received from other nodes to bitstrings.

The storage unit 220 stores data such as basic programs for operations of the DU 160, application programs, and configuration information. The storage unit 220 may include a memory. The storage unit 220 may be configured by a volatile memory, a nonvolatile memory, or a combination of a volatile memory and a nonvolatile memory. In addition, the storage unit 220 provides stored data at the request of the control unit 230.

The control unit 230 controls overall operations of the DU 160. For example, control unit 230 transmits and receives signals through the communication unit 210 (or through the backhaul communication unit). In addition, the control unit 230 records and reads data in the storage unit 220. In addition, the control unit 230 may perform functions of a protocol stack required by communication specifications. To this end, the control unit 230 may include at least one processor.

Components of the DU 160 illustrated in FIG. 2 are only an example, and the example of the DU configured to perform various embodiments of the disclosure is not limited by the components illustrated in FIG. 2. According to various embodiments, some components may be added/deleted/modified.

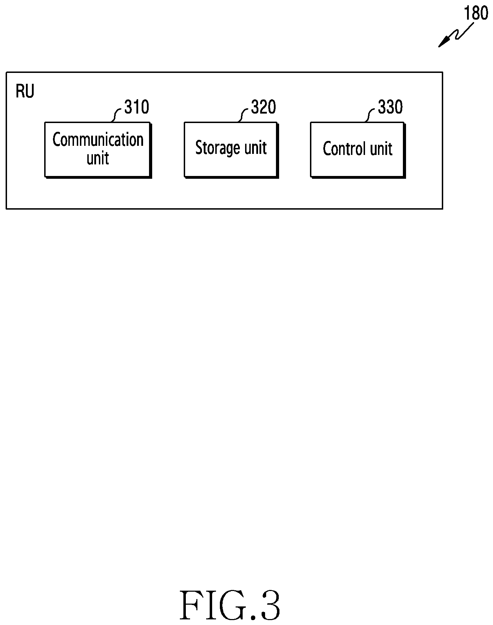

FIG. 3 illustrates the configuration of a radio unit (RU) in a wireless communication system according to various embodiments of the disclosure. The exemplary configuration illustrated in FIG. 3 may be understood as the configuration of the RU 160 in FIG. 1B, as a part of the base station. As used herein, the term "... unit", "-er", or the like refers to a unit configured to process at least one function or operation, and may be implemented as hardware, software, or a combination of hardware and software.

Referring to FIG. 3, the RU 180 includes a communication unit 310, a storage unit 320, and a control unit 330.

The communication unit 310 may perform functions for transmitting/receiving signals through a radio channel. For example, the communication unit 310 up-converts a baseband signal to an RF band signal, transmits the same through an antenna, and down-converts an RF band signal received through the antenna to a baseband signal. For example, the communication unit 310 may include a transmission filter, a reception filter, an amplifier, a mixer, an oscillator, a DAC, an ADC, and the like.

In addition, the communication unit 310 may include multiple transmission/reception paths. Furthermore, the communication unit 310 may include an antenna unit. The communication unit 310 may include at least one antenna array configured by multiple antenna elements. From the hardware point of view, the communication unit 310 may be configured by a digital circuit and an analog circuit (for example, radio frequency integrated circuit (RFIC)). The digital circuit and the analog circuit may be implemented as a single package. In addition, the communication unit 310 may include multiple RF chains. The communication unit 310 may perform beamforming. In order to assign directivity based on configurations of the control unit 330 to a signal to be transmitted/received, the communication unit 310 may apply a beamforming weight to the signal. According to an embodiment, the communication unit 310 may include a radio frequency (RF) block (or RF unit).

In addition, the communication unit 310 may transmit/receive signals. To this end, the communication unit 310 may include at least one transceiver. The communication unit 310 may transmit a downlink signal. The downlink signal may include a synchronization signal (SS), a reference signal (RS) (for example, cell-specific reference signal (CRS), demodulation (DM)-RS), system information (for example, MIB, SIB, remaining system information (RMSI), other system information (OSI)), a configuration message, control information, downlink data, or the like. In addition, the communication unit 310 may receive an uplink signal. The uplink signal may include a random access-related signal (for example, random access preamble (RAP) (or message 1 (Msg1), message 3 (Msg3)), a reference signal (for example, sounding reference signal (SRS), DM-RS), a power headroom report (PHR), or the like.

The communication unit 310 transmits and receives signals as described above. Accordingly, all or part of the communication unit 310 may be referred to as "transmission unit", "reception unit", or "transmission/reception unit". In addition, in the following description, transmission and reception performed through a radio channel are interpreted as including the above-described processing performed by the communication unit 310.

The storage unit 320 stores data such as basic programs for operations of the RU 180, application programs, and configuration information. The storage unit 320 may be configured by a volatile memory, a nonvolatile memory, or a combination of a volatile memory and a nonvolatile memory. In addition, the storage unit 320 provides stored data at the request of the control unit 330. According to an embodiment, the storage unit 320 may include a memory for conditions, commands, or configuration values related to SRS transmission schemes.

The control unit 330 controls overall operations of the RU 180. For example, control unit 330 transmits and receives signals through the communication unit 310. In addition, the control unit 330 records and reads data in the storage unit 320. In addition, the control unit 330 may perform functions of a protocol stack required by communication specifications. To this end, the control unit 330 may include at least one processor. In some embodiments, the control unit 330 may be configured to transmit an SRS to the DU 160, based on an antenna number. In addition, in some embodiments, the control unit 330 may be configured to transmit an SRS to the DU 160 after uplink transmission. A conditional command based on an SRS transmission scheme, or a configuration value may, be an instruction set or code stored in the storage unit 320, the instruction/code may at least temporarily reside in the control unit 330, or the instruction/code may be stored in a storage space, or the same may be a part of circuitry constituting the control unit 330. In addition, the control unit 330 may include various modules for performing communication. According to various embodiments, the control unit 330 may control the RU 180 to perform operations according to various embodiments described later.

FIG. 4 illustrates an example of function split in a wireless communication system according to various embodiments of the disclosure. In line with development of wireless communication technologies (for example, introduction of 5^{th} generation (5G) communication systems (or new radio (NR) communication systems)), employed frequency bands have increased further, and the substantially reduced cell radius of base stations has further increased the number of RUs to be installed. In addition, in 5G communication systems, the amount of transmitted data has increased up to 10 times, and the amount of transmission in wired networks made through the fronthaul has substantially increased accordingly. Due to such factors, the cost for installing wired networks in 5G communication systems may increase substantially. Therefore, technologies have been proposed, in order to decrease the amount of transmission in wired networks and to reduce the cost for installing wired networks, such that some functions of the DU's modem are relocated to the RU, thereby decreasing the amount of transmission made through the fronthaul, and such technologies may be referred to as "function split".

A scheme of expanding the role of the RU which handles only RF functions to some functions of the physical layer, in order to reduce the burden of the DU, is considered. As the RU performs functions of a higher layer, the amount of processing by the RU may increase, thereby increasing the transmission bandwidth through the fronthaul, and simultaneously reducing restrictions on delay time requirements resulting from response processing. Meanwhile, as the RU performs functions of a higher layer, virtualization gain decreases, and the RU's size/weight/cost increases. It is requested to implement an optimal function split in consideration of the trade-ff between the advantages and disadvantages described above.

FIG. 4 illustrates function splits on physical layers below the MAC layer. In the case of a downlink (DL) for transmitting signals to a UE through a radio network, the base station may successively perform channel encoding/scrambling, modulation, layer mapping, antenna mapping, RE mapping, digital beamforming (for example, precoding), IFFT transform/CP insertion, and RF transform. In the case of an uplink (UL) for receiving signals from the UE through the radio network, the base station may successively RF transform, FFT transform/CP removal, digital beamforming (pre-combining), RE demapping, channel estimation, layer demapping, demodulation, and decoding/descrambling. The split regarding uplink functions and downlink functions may be defined in various types according to the above-described trade-off in consideration of needs between vendors, discussion on specifications, and the like.

The first function split 405 may be a split between RF functions and PHY functions. The first function split is configured such that PHY functions in the RU are not substantially implemented, and may be referred to as Option 8, as an example. The second function split 410 is configured such that the RU performs IFFT transform/CP insertion in the DL of PHY functions and performs FFT transform/CP removal in the UL, and the DU performs remaining PHY functions. As an example, the second function split 410 may be referred to as Option 7-1. The third function split 420a is configured such that the RU performs IFFT transform/CP insertion in the DL of PHY functions and performs FFT transform/CP removal and digital beamforming in the UL, and the DU performs remaining PHY functions. As an example, the third function split 420a may be referred to as Option 7-2x Category A. The fourth function split 420b is configured such that the RU performs up to digital beamforming in both DL and UL, and the DU performs upper PHY functions after digital beamforming. As an example, the fourth function split 420b may be referred to as Option 7-2x Category B. The fifth function split 425 is configured such that the RU performs up to RE mapping (or RE demapping) in both DL and UL, and the DU performs upper PHY functions after RE mapping (or RE demapping). As an example, the fifth function split 425 may be referred to as Option 7-2. The sixth function split 430 is configured such that the RU performs up to modulation (or demodulation) in both DL and UL, and the DU performs upper PHY functions after modulation (or demodulation). As an example, the sixth function split 430 may be referred to as Option 7-3. The seventh function split 440 is configured such that the RU performs up to encoding/scrambling (or decoding/descrambling) in both DL and UL, and the DU performs upper PHY functions after modulation (or demodulation). As an example, the seventh function split 434 may be referred to as Option 6.

According to an embodiment, in case that a large amount of signal processing is expected (for example, FR1 MMU), a function split on a relatively high layer (for example, the fourth function split 420b) may be requested to reduce the fronthaul capacity. In addition, a function split on a too high layer (for example, the sixth function split 430) may complicate the control interface, and may make it burdensome to implement the RU because multiple PHY processing blocks are included in the RU. Therefore, an appropriate function split may be requested according to the manner in which the DU and the RU are deployed and implemented.

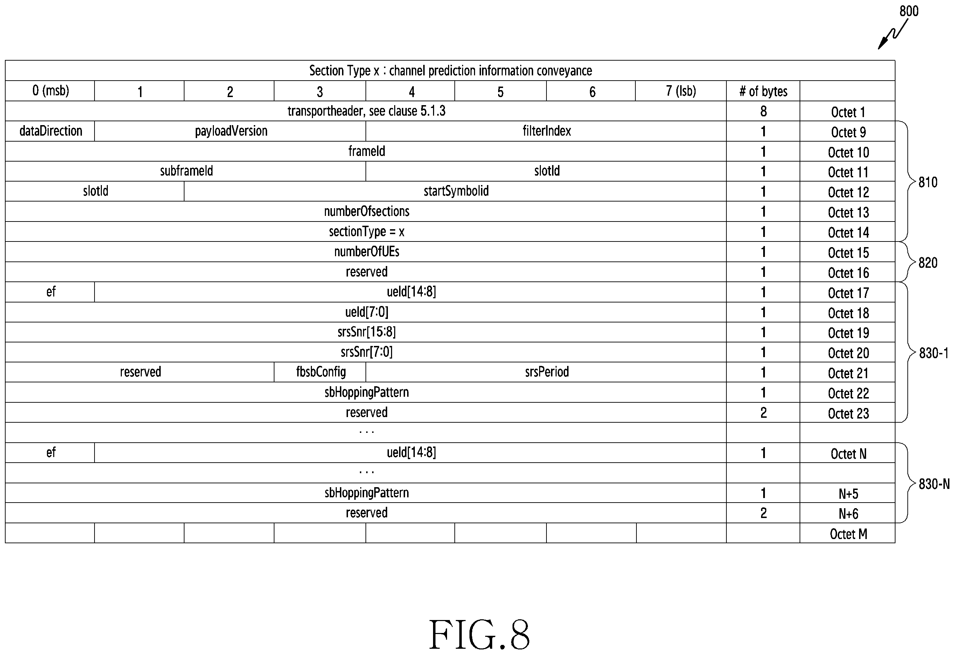

According to an embodiment, in case that data received from the DU cannot be precoded (that is, in case that the RU's precoding capability is limited), the third function split 420a or a lower level of function split (for example, the second function split 410) may be applied. To the contrary, in case that data received from the DU can be precoded, the fourth function split 420b or a higher level of function split (for example, the sixth function split 430) may be applied. Hereinafter, various embodiments of the disclosure will be described with reference to the third function split 420a (category A) or the fourth function split 420b (category B), unless otherwise specified, such that the RU processes beamforming, but embodiments may also be configured through other function splits. Functional configurations, signaling, or operations described later with reference to FIG. 8 to FIG. 12 may be applied not only to the third function split 420a or the fourth function split 420b, but also to the other function splits.

In various embodiments of the disclosure, specifications of eCPRI and O-RAN will be described as an example of a fronthaul interface when a message is transmitted between a DU (for example, the DU 160 in FIG. 1B) and an RU (for example, the RU 180 in FIG. 1B). The message's Ethernet payload may include an eCPRI header, an O-RAN header and additional fields. Hereinafter, various embodiments of the disclosure will be described by using specification terms of eCPRI or O-RAN, but other expressions having the same meanings as respective terms will be used instead in various embodiments of the disclosure.

As a fronthaul transport protocol, Ethernet and eCPRI may be used because of ease of sharing with networks. The Ethernet payload may include an eCPRI header and an O-RAN header. The eCPRI header may be positioned at the front end of the Ethernet payload. The eCPRI header has the following content:
- ecpriVersion (4 bits): 0001b (fixed value)
- ecpriReserved (3 bits): 0000b (fixed value)
- ecpriConcatenation (1 bit): 0b (fixed value)
- ecpriMessage (1 byte): Message type
- ecpriPayload (2 bytes): Payload size in bytes
- ecpriRtcid / ecpriPcid (2 bytes): x,y,z may be configured through a management plane (M-plane). The corresponding field may indicate a control message transmission path (extended antenna-carrier (eAxC) in eCPRI) according to various embodiments during multi-layer transmission.
   ▪ CU_Port_ID (x bits): distinguishes a channel card. A modem can also be distinguished (2 bits for channel card, 2 bits for modem)
   ▪ BandSector_ID (y bits): distinguishes according to the cell/sector
   ▪ CC_ID (z bits): distinguishes according to the component carrier
   ▪ RU_Port_ID (w bits): distinguishes according to the layer, T, antenna, or the like
- ecpriSeqid (2 bytes): the sequence ID is managed with regard to each ecpriRtcid/ecpriPcid. The sequence ID and the subsequence ID are separately managed. Radio-transport-level fragmentation is possible (different from application-level fragmentation) if the subsequence ID is used

The fronthaul application protocol may include a control plane (C-plane), a user plane (U-plane), a synchronization plane (S-plane), and a management plane (M-plane).

The control plane may be configured to provide scheduling information and beamforming information through a control message. The user plane may include the user's downlink data (IQ data or SSB/RS), uplink data (IQ data or SSB/RS), or PRACH data. The above-described beamforming information' weight vector may be multiplied by the user's data. The synchronization plane may be related to timing and synchronization. The management plane may be related to the initial setup, non-realtime reset, or reset, non-realtime report.

In order to define the type of a message transmitted on the control plane, a section type is defined. The section type may indicate the use of a control message transmitted on the control plane. For example, each section type indicates the following usage:
- sectionType=0: DL idle/guard periods - used for Tx blanking for power saving
- sectionType=1: maps a BF index or weight (O-RAN mandatory BF type) to the DL/UL channel's RE
- sectionType=2: reserved
- sectionType=3: maps a beamforming index or weight to the PRACH and mixed-numerology channel's RE
- sectionType=4: reserved
- sectionType=5: transfers UE scheduling information such that the RU can calculate the BF weight in real time (O-RAN optional BF type)
- sectionType=6: transfers UE channel information periodically such that the RU can calculate the BF weight in real time (O-RAN optional BF type)
- sectionType=7: used for LAA support

FIG. 5 illustrates an example of connection between a DU and an RU according to various embodiments of the disclosure. Descriptions have been made with reference to one RU connected to one DU in FIG. 1 to FIG. 5. However, embodiments according to the disclosure may also be applied between multiple radio units (RUs) connected to one digital unit (DU).

According to various embodiments of the disclosure, an O-DU 160 may refer to the DU 160 in FIG. 1B and FIG. 2, and an O-RU 180 may refer to the RU 180 in FIG. 1B and FIG. 3. That is, descriptions regarding the O-DU 160 and the O-RU 180 in FIG. 1 to FIG. 13 may be identically applied to descriptions regarding the DU 160 and the RU 180, respectively. It is obvious that, although FIG. 1 to FIG. 13 illustrate an example of the O-DU and O-RU based on O-RAN specifications for convenience of description, the following descriptions may be equally applied to a DU and an RU based on 3GPP.

According to various embodiments of the disclosure, the O-RU 180 may perform a channel prediction function for more accurate and efficient channel estimation. However, in case that multiple O-RUs 180 are connected to one DU, not all O-RUs 180 can perform the channel prediction function. Therefore, a DU connected to multiple O-RUs 180 may identify O-RUs 180 capable of performing the channel prediction function prior to transmitting information regarding channel prediction. As will be described later, the O-RU 180 configured to perform the channel prediction function may transmit capability information to the DU through the management plane (M-plane) to indicate that the channel prediction function is supported. The DU connected to multiple O-RUs 180 may identify O-RUs 180 supporting the channel prediction function, among multiple O-RUs 180, based on the received capability information. The DU may transmit a control message including information regarding channel prediction to O-RUs 180 supporting the channel prediction function only, thereby reducing signal transmission overhead and preventing unnecessary waste of resources.

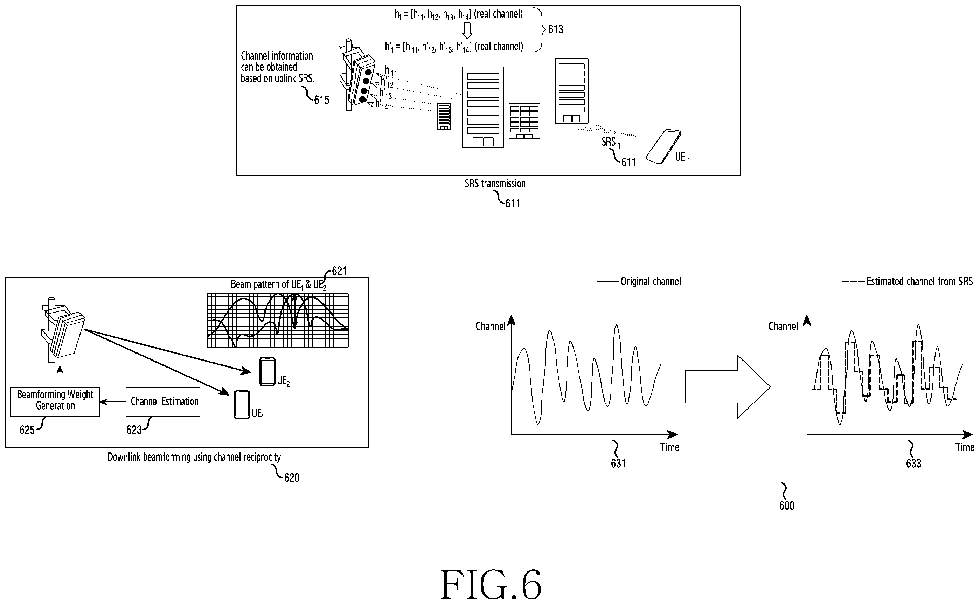

FIG. 6 illustrates an example of channel estimation based on a sounding reference signal (SRS) according to various embodiments of the disclosure.

Channel estimation may refer to a process of estimating a symbol change (for example, amplitude or phase) due to a channel through which a transmitted symbol passes. Channel estimation may be expressed by an equation such as *y = S * H + n.* In the equation, *y* may refer to a received signal, S may refer to a transmitted symbol (or signal), *H* may refer to a channel matrix, and *n* may refer to noise. Consequently, channel estimation may refer to a process of estimating a channel by acquiring the *H* configured by a matrix, based on a transmitted signal, a received signal, and noise. As a typical uplink estimation scheme, sounding reference signal (SRS) transmission may be used. A UE may transmit an SRS, which has a specific section of a resource grip mapped to a bandwidth (BW) or time axis, to a base station. Upon receiving the SRS, the base station may estimate an uplink signal channel, based on various channel estimation techniques including the least square (LS) technique or minimum mean square error (MMSE) technique. The base station may make a determination regarding link adaptation, based on the received SRS. In case that channel reciprocity is satisfied in a system supporting time division duplexing (TDD), the base station may estimate a channel for downlink signal transmission, based on the received SRS. The channel reciprocity may mean that bidirectional radio channel characteristics are similar between the base station and the UE. Therefore, in case that bidirectional radio channel characteristics are similar, the base station may estimate a channel for downlink signal transmission, based on an SRS (uplink signal). Consequently, in the case of TDD, the base station may acquire CSI more easily by using the channel reciprocity between uplink channel and the downlink. According to various embodiments of the disclosure, an SRS-based downlink channel estimation technique will be described assuming a case in which channel reciprocity is satisfied in a TDD system, but the disclosure is obviously not limited thereto, and may also be applied to various wireless communication systems (for example, FDD systems) or a case in which channel reciprocity is not satisfied.

Referring to FIG. 6, SRS transmission may be performed for downlink channel estimation (610). The UE may transmit an SRS₁ 611 to the base station. The base station may acquire uplink channel information, based on the received uplink SRS₁ (615). More specifically, in case that a matrix related to an actual channel is h₁=[h₁₁, h₁₂, h₁₃, h₁₄], the base station may acquire a matrix h*=[h*₁₁, h*₁₂, h*₁₃, h*₁₄] regarding an estimated channel which is close thereto, based on the received SRS₁. In order to acquire such an estimated channel matrix, various channel estimation techniques, including the above-described LS technique or MMSE technique, may be used.

Referring to FIG. 6, based on an assumption that channel reciprocity is satisfied in a TDD system, the base station may identify a downlink estimated channel value, based on the estimated uplink channel value. The base station may perform beamforming, based on the identified downlink estimated channel value (620). More specifically, in case that channel reciprocity is satisfied, bidirectional (uplink and downlink) communication channels may be considered as having identical characteristics, and the base station may thus consider that the estimated uplink channel is the estimated downlink channel (623). Although not illustrated in FIG. 6, the base station may store information regarding estimated channels in the channel memory of the O-RU 180. The base station may generate beamforming weights regrading respective UEs, based on the estimated downlink channel value (625). During downlink signal transmission, the base station may generate beamforming weights, based on the estimated channel values stored in the channel memory of the O-RU 180. The base station may perform beamforming by applying beamforming weights generated with regard to respective UEs, and may transmit signals to respective UEs, based on beamforming.

As described above, the base station may estimate the downlink channel, based on an uplink SRS signal transmitted periodically. While the SRS signal is periodically updated (for example, 5ms or 10ms), a downlink signal may be transmitted at each transmission time interval (TTI) for example, 1ms), and the estimated channel values stored in the channel memory of the O-RU 180 may thus lag. In addition, an actual channel may change in real time at each hour, and the beamforming performance may be degraded by the difference between the timepoint at which an SRS is received and the timepoint at which an estimated channel value is applied to beamforming (630). More specifically, the actual channel value 631 may continuously change along the time axis, but a channel value 633 estimated based on a periodically transmitted SRS inevitably has a constant value according to the periodicity due to the difference from the timepoint at which the same is applied to beamforming, and this may degrade the channel estimation accuracy.

In order to solve the above-described problems, a channel prediction function may be performed for more accurate channel estimation. Hereinafter, a technology for operating an O-RU 180 configured to perform the channel prediction function, according to various embodiments of the disclosure, will be described.

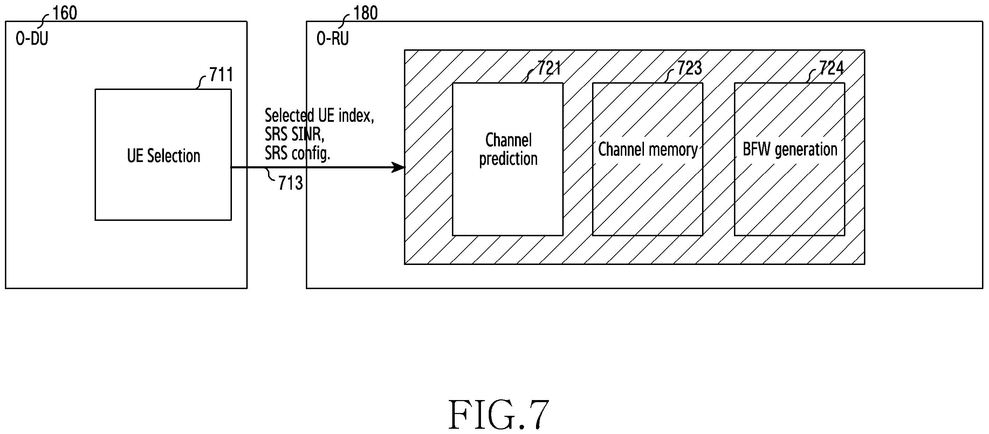

FIG. 7 illustrates an example of message transmission for channel prediction between an O-DU and an O-RU according to various embodiments of the disclosure. Specifically, referring to FIG. 7, the O-DU 160 may receive an SRS from a UE and may transmit information regarding the SRS to the O-RU 180 configured to perform a channel prediction function. According to various embodiments of the disclosure, the channel prediction function 721 may be performed by the O-RU 180, but is not limited thereto.

More specifically, unlike existing techniques in which channel estimation is performed simply by using an uplink SRS, the O-RU 180 configured to perform the channel prediction function 721 may further apply an SRS signal to interference & noise ratio (SINR) value or SRS configuration information, thereby acquiring a channel value closer to the actual channel, and performing beamforming. The SRS configuration information may include at least one from among the index of a UE which has transmitted the SRS, SRS transmission periodicity, SRS band-related information, or SRS hopping pattern-related information. The O-RU 180 may perform channel prediction for more accurate channel estimation, based on the received SRS configuration information, and may identify only UEs appropriate for channel prediction, thereby reducing the complexity of channel prediction. In addition, the O-RU 180 may apply the received SRS configuration information to new function implementation, including channel prediction, thereby utilizing the same variously.

Referring to FIG. 7, the O-DU 160 may select a UE supposed to perform channel prediction, based on SRSs received from multiple UEs (711). The O-DU 160 may identify a UE expected to have a large advantage through channel prediction performed by the O-RU 180. The O-DU 160 may identify a UE, based on a predetermined criterion. According to an embodiment, the O-DU 160 may identify a UE, regarding which the degree of improvement in accuracy of channel estimation through channel prediction performed by the O-RU 180 is equal to/larger than a specific reference value. According to an embodiment, the predetermined criterion or specific reference value may be preconfigured for the O-DU 160. According to various embodiments of the disclosure, the predetermined criterion or specific reference value may not be limited to the above-described example, and may include various criteria.

Referring to FIG. 7, the O-DU 160 may transmit at least one 713 from among the index regarding the identified UE, the SRS SINR value, or SRS configuration information to the O-RU 180. According to an embodiment, the O-DU 160 may transmit a control message including at least one 713 from among the index regarding the identified UE, the SRS SINR value, or SRS configuration information to the O-RU 180. The O-RU 180 configured to perform the channel prediction function 721 may further apply the SRS SINR value or SRS configuration information, thereby acquiring a channel value closer to the actual channel. The SRS configuration information may include at least one from among the index of the UE which has transmitted the SRS, SRS transmission periodicity, SRS band-related information, or SRS hopping pattern-related information. The O-RU 180 may perform channel prediction, based on at least one from among an SRS channel estimation value (for example, estimated channel matrix) stored in the channel memory 723 or information received from the O-DU 160. The O-RU 180 may generate a beamforming weight, based on the channel prediction result (725), and may perform beamforming, based on the generated beamforming weight. The O-RU 180 may perform channel prediction for more accurate channel estimation, based on the received SRS configuration information, and may identify only UEs appropriate for channel prediction, thereby reducing the complexity of channel prediction.

FIG. 8 illustrates an example of a frame format for channel prediction of a control message according to various embodiments of the disclosure.

Referring to FIG. 8, a separate section type may be defined for a control message 800 for channel prediction transmitted from a DU to an RU. However, according to various embodiments of the disclosure, the control message 800 for channel prediction transmitted from a DU to an RU may not be limited to a separate section type, and may correspond to a section type defined existing O-RAN specifications. The control message 800 including information regarding channel prediction may be included in the Ethernet header's payload. The control message 800 may include a transmission header, and the transmission header may include an eCPRI header.

According to an embodiment, the control message 800 for channel prediction may include a parameter regarding information 810 of the control message. According to an embodiment, the information 810 of the control message may include a common radio application header. dataDirection is one-bit information and may indicate whether data's direction corresponds to the uplink or downlink by using 0 or 1. filterIndex may indicate a channel filter in the RU. frameId may indicate a specific frame's index. subframeId and slotId may indicate a specific subframe and a specific slot in a frame, respectively. numberOfsections may indicate the number of sections included in a control message. SectionType may indicate the section type of a message to be applied to channel prediction information transmission. However, the above-described information is only an example, and is not limitative. Obviously, respective parameters included in a control message may be replaced with other parameters having similar functions, and each parameter may have a variable information length.

According to an embodiment, the control message 800 for channel prediction may include information 820 regarding the number of UEs connected to the DU. According to an embodiment, the control message 800 for channel prediction may include information 820 regarding the number of UEs supposed to perform channel prediction identified by the DU.

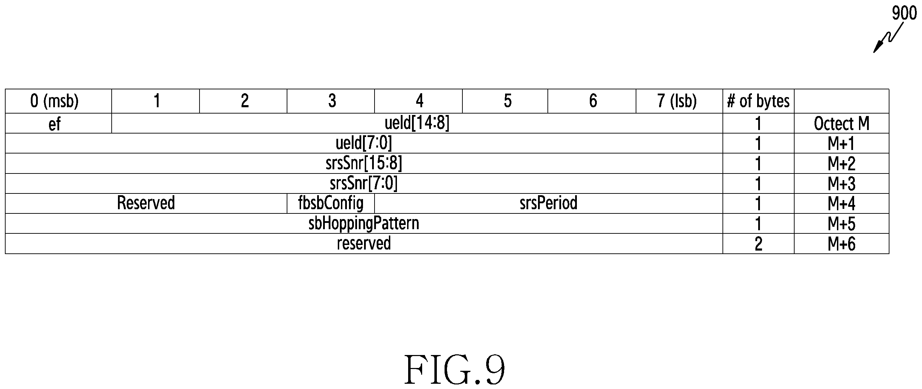

According to an embodiment, the control message 800 for channel prediction may include information 830-1, 830-N regarding channel prediction corresponding to UEs supposed to perform channel prediction. The information 830-1, 830-N regarding channel prediction corresponding to UEs may be configured with regard to each UE. According to an embodiment, the control message 800 for channel prediction may include information 830-1, 830-N regarding UE-specific channel prediction corresponding to at least one UE for forming channel prediction. As described above with reference to FIG. 7, the DU may identify UEs supposed to perform channel prediction among multiple UEs, and may transmit a control message including information 830-1, 830-N regarding channel prediction corresponding to each identified UE to the RU. The information 830-1, 830-N regarding channel prediction included in the control message will be described in detail with reference to FIG. 9. Although the control message 800 in FIG. 8 has been described as including a separate section type, the control message may use an existing section type of O-RAN specifications, without being limited thereto, according to various embodiments of the disclosure, or may include information for channel prediction described above by using an expanded field of an existing format.

FIG. 9 illustrates an example of parameter information included in a frame format of a control message for channel prediction according to various embodiments of the disclosure. More specifically, FIG. 9 illustrates an example of parameters of information 830-1, 830-N regarding UE-specific channel prediction corresponding to at least one UE for performing channel prediction.

Referring to FIG. 9, the control message may be referred to as one of a newly defined section type or an existing section type defined based on O-RAN specifications. The control message's extension field may include at least one of an extension flag (ef), a UE Identifier (ueId), a sounding reference signal signal-to-noise ratio (SRS SNR) (srsSnr), band SRS configuration information (fbsbConfig), SRS periodicity (srsPeriod), SRS hopping pattern (sbHoppingPattern).

According to an embodiment, the extension flag may indicate that there is a section extension behind the header. According to an embodiment, the extension flag may be one-bit information and may indicate that there is a section extension by using 0 or 1. That is, the extension flag may indicate that there is a parameter additionally defined in the section type, behind the header, thereby providing extendibility regarding the current section type's parameters, without having to generate a new section type. According to an embodiment, the extension flag may be disposed in front of a beam identifier (beamId) or user equipment identifier (ueId).

According to an embodiment, ueId may indicate the index of a UE associated with SRS-based channel information. According to an embodiment, ueId may be the index of a UE for performing channel prediction identified by the DU. According to an embodiment, the index of a UE may include 15 bits (0 to 14), and the control message's frame format may include the index of a UE divided into 7 bits (for example, ueId[14:8] including bit no. 8 to bit no. 14 among the index of a UE) and 8 bits (for example, ueId[7:0] including bit no. 0 to bit no. 7 among the index of a UE). Although ueId is illustrated in FIG. 9 as including ueId[14:8] having a 7-bit length and ueId[7:0] having an 8-bit length, this is only an example, and ueId may be defined to have a different name or length.

According to an embodiment, srsSnr may be information regarding the signal-to-noise (SNR) value of an SRS received by the DU. According to an embodiment, srsSnr may be information regarding the SNR value of an SRS received from a UE for performing channel prediction identified by the DU. According to an embodiment, the SRS's NSR value may include 16 bits (0 to 15), and the control message's frame format may include the SRS's NSR value divided into 8 bits (for example, srsSnr[15:8] including bit no. 8 to bit no. 15 among the SRS's NSR value) and an 8 bits (for example, srsSnr[7:0] including bit no. 0 to bit no. 7 among the SRS's NSR value). Although srsSnr is illustrated in FIG. 9 as including srsSnr[14:8] and srsSnr[7:0] each having an 8-bit length and, this is only an example, and srsSnr may be defined to have a different name or length.

According to an embodiment, fbsbConfig may indicate whether an SRS received by the DU is information regarding a full band or information regarding a sub-band. According to an embodiment, fbsbConfig may be one-bit information, and may indicate whether SRS configuration information allocated to the UE by the base station is sub-band-related information or full band-related information by using 0 or 1. For example, in case that fbsbConfig is 0, the SRS configuration information may be information regarding one or more sub-bands included in a bandwidth assigned allocated with regard to SRS transmission. Alternatively, in case that fbsbConfig is 1, the SRS configuration information may be information regarding a full band of a bandwidth assigned allocated with regard to SRS transmission. However, this is only an example, the content indicated by fbsbConfig may differ, and may be defined to have a different name, location, or length.

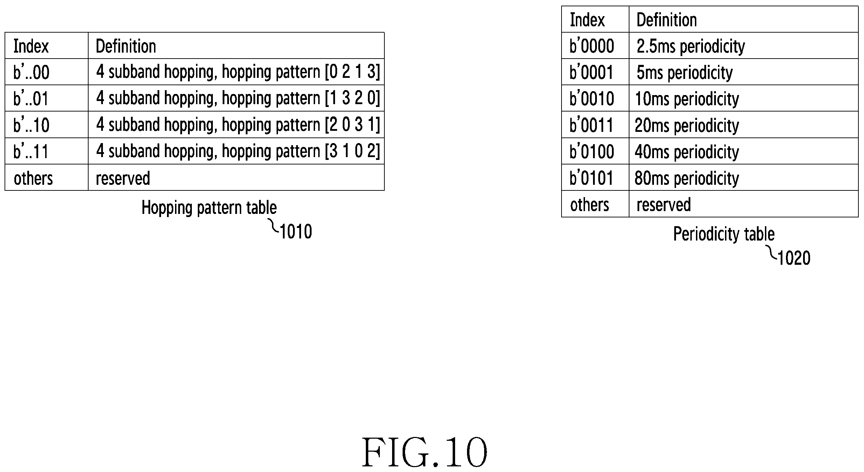

According to an embodiment, srsPeriod may indicate the periodicity of an SRS transmitted by the UE. According to an embodiment, srsPeriod may include an index defined based on an SRS transmission periodicity table included in a management message transmitted through the management plane (M-Plane). The association between srsPeriod and the SRS transmission periodicity table is described in detail FIG. 10. According to an embodiment, the RU may identify the UE's SRS transmission periodicity, based on the index indicated by srsPeriod included in the control message and the SRS transmission periodicity table included in the management message. The RU may perform channel prediction, based on the identified SRS transmission periodicity. However, this is only an example, the content indicated by srsPeriod may differ, and may be defined to have a different name, location, or length. In addition, the SRS transmitted by the UE may include not only a periodic SRS, but also an aperiodic or semi-persistent SRS.

According to an embodiment, sbHoppingPattern may indicate the order of one or more sub-bands in which an SRS is transmitted, in case that fbsbConfig indicates sub-bands. According to an embodiment, sbHoppingPattern may indicate the order of one or more sub-bands included in an SRS transmitted by the UE, based on SRS configuration information allocated to the UE by the base station. According to an embodiment, sbHoppingPattern may be 8-bit information and may include an index regarding the hopping pattern of the SRS. According to an embodiment, sbHoppingPattern may an index defined based on a hopping pattern table included in a management message transmitted through the management plane (M-Plane). The association between sbHoppingPattern and the hopping pattern table is described in detail FIG. 10. According to an embodiment, the RU may identify the hopping pattern of SRS sub-bands of the UE, based on the index indicated by sbHoppingPattern included in the control message and the hopping pattern table included in the management message. The RU may perform channel prediction, based on the identified SRS hopping pattern. However, this is only an example, the content indicated by sbHoppingPattern may differ, and may be defined to have a different name, location, or length.

FIG. 10 illustrates an example of a management-plane (M-plane) information parameter according to various embodiments of the disclosure. More specifically, FIG. 10 illustrates an example of an information parameter included in signaling on a management-plane (M-plane) between a DU and an RU.

According to an embodiment, the O-RU 180 may transmit capability information regarding channel prediction function support to the O-DU 160. The capability information transmitted by the O-RU 180 may include indication information indicating whether the O-RU 180 can perform channel prediction. The O-RU 180 may transmit the capability information to the O-DU 160 through the management plane as a message (for example, management message). The capability information regarding channel prediction function support from the O-RU 180 may be included in the message as a management-plane (M-plane) parameter of O-RAN. However, this is only an example and is not limitative, and the O-RU 180 may transmit the capability information to the O-DU 160 through various messages including the control message of the control plane.

According to an embodiment, the O-DU 160 may transmit information associated with a parameter included in information regarding channel prediction to the O-RU 180. That is, separately from a control message including information regarding channel prediction, the O-DU 160 may transmit information associated with the control message to the O-RU 180 through the management plane. The information associated with the control message from the O-DU 160 may be included in a message as a management-plane (M-plane) parameter of O-RAN. However, this is only an example and is not limitative, and the O-DU 160 may transmit the information associated with the control message to the O-RU 180 through various messages including the control message of the control plane.

According to an embodiment, the information associated with a parameter included in information regarding channel prediction (for example, information associated with a control message) may include information 1010 regarding a hopping pattern table. As illustrated in FIG. 6 to FIG. 9, the O-RU 180 may receive a control message or a management message including information 1010 regarding a hopping pattern table from the O-DU 160. The O-RU 180 may identify the index of a hopping pattern parameter included in the received control message. The O-RU 180 may identify the mapping relation between the identified index of a hopping pattern parameter and the information regarding a hopping pattern table. For example, in case that the index of a hopping pattern parameter identified by the O-RU 180 is b'..01, the O-RU 180 may identify that the SRS' hopping pattern is 4-sub-band hopping and has a hopping pattern of {1 3 2 0}. As illustrated in FIG. 9, in case that the number of bits for a hopping pattern included in a control message is 8, the table associated with a hopping parameter included in a management message may include a maximum of 2⁸ pieces of index mapping information, including a reserved index. However, this is only an example, and the number of bits included in the control message, the content of the table included in the management message, or specific content of information is not limited to FIG. 6 to FIG. 10.

According to an embodiment, the information associated with a parameter included in information regarding channel prediction (for example, information associated with a control message) may include information 1020 regarding a table including SRS transmission periodicity. As illustrated in FIG. 6 to FIG. 9, the O-RU 180 may receive a control message or a management message including information 1020 regarding a table including SRS transmission periodicity from the O-DU 160. The O-RU 180 may identify the index of an SRS transmission periodicity parameter included in the received control message. The O-RU 180 may identify the mapping relation between the identified index of an SRS transmission periodicity parameter and the information regarding a table including periodicity. For example, in case that the index of an SRS transmission periodicity parameter identified by the O-RU 180 is b'0010, the O-RU 180 may identify that the SRS' transmission periodicity is 10ms. As illustrated in FIG. 9, in case that the number of bits for SRS transmission periodicity included in a control message is 4, the table associated with SRS transmission periodicity included in a management message may include a maximum of 2⁴ pieces of index mapping information, including a reserved index. However, this is only an example, and the number of bits included in the control message, the content of the table included in the management message, or specific content of information is not limited to FIG. 6 to FIG. 10.

Referring to FIG. 10, the management message transmitted to the O-RU 180 through the management plane includes information 1010 regarding a hopping pattern and information 1020 regarding SRS transmission periodicity, but is not limited thereto, and the management message may further include various pieces of information associated with the control message of the disclosure, information regarding the initial setup, and the like.

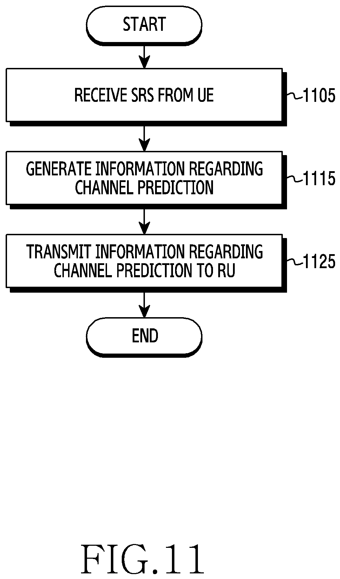

FIG. 11 illustrates a flow of operations of a distributed unit (DU) for transmitting a control message related to channel prediction according to various embodiments of the disclosure. Specifically, FIG. 11 illustrates a flow of operations of a DU which receives an SRS from a UE, generates information regarding channel prediction, and transmits a control message including the information regarding channel prediction to an RU. Obviously, according to various embodiments of the disclosure, FIG. 11 is only an example and is not limitative, and operations may be performed as some of the operations illustrated in FIG. 11 or as or as combinations of some operations. In addition, although FIG. 11 illustrates a DU and an RU, the DU and RU may refer to an O-DU and an O-RU (terms based on O-RAN specifications), respectively, according to various embodiments of the disclosure, without being limited thereto, and the above-mentioned terms may be used interchangeably.

In step 1105, the DU may receive a sounding reference signal (SRS) from a UE. Although not illustrated in FIG. 11, the base station (for example, DU or RU) may transmit SRS configuration information for uplink SRS transmission to the UE. According to an embodiment, the SRS configuration information transmitted by the base station may include an indicator indicating whether the transmitted SRS is a periodic, aperiodic, or semi-persistent SRS. In addition, the SRS configuration information transmitted by the base station may indicate whether the SRS transmission is related to a full band or related to a sub-band. As described above, according to an embodiment, the DU may receive an uplink SRS from the UE, based on SRS configuration information.

Although not illustrated in FIG. 11, the DU may receive a message including channel prediction capability information from the RU. According to an embodiment, the RU may receive information regarding an SRS from the DU, and may perform a channel prediction function for more accurate channel estimation, based thereon. However, this is not limitative, and the channel prediction function according to various embodiments of the disclosure may be referred to as different names, including the above-described functions. Specifically, the channel prediction capability information may include information indicating whether the RU can perform a channel prediction function or supports the channel prediction function. According to an embodiment, the RU may transmit capability information regarding the channel prediction function to the DU through the management plane as a message (for example, management message). The capability information regarding the channel prediction function from the RU may be included in the message as a management plane (M-plane) parameter of O-RAN. According to an embodiment, capability information regarding channel prediction function support by the RU included in a management message may be indicated by a parameter such as ch-pred-supported. However, this is only an example and is not limitative, and the RU may transmit capability information to the DU through various messages including the control message of the control plane. In addition, according to various embodiments of the disclosure, the operation in which the DU receives channel prediction capability information from the RU may not necessarily be included. According to an embodiment, the above-described channel prediction capability information may include operations illustrated in FIG. 10.

In step 1115, the DU may generate channel prediction information, based on an SRS received from the UE. Although not illustrated in FIG. 11, the DU may generate information regarding downlink channel estimation, based on the SRS received from the UE, prior to generating channel prediction information, and may transmit the generated information regarding channel estimation (for example, estimated channel matrix) to the RU. Operations regarding channel estimation are illustrated in detail in FIG. 6. According to an embodiment, based on an assumption that channel reciprocity is satisfied in a TDD system, the DU may identify a downlink estimated channel value, based on an estimated uplink channel value, and may transmit an estimated channel value (for example, channel matrix) to the RU. According to an embodiment, the RU may perform beamforming, based on the downlink estimated channel value. More specifically, in case that channel reciprocity is satisfied, bidirectional (uplink and downlink) communication channels may be considered as having identical characteristics, and the base station (including the DU or RU) may thus consider that the estimated uplink channel is the estimated downlink channel. According to an embodiment, the RU may store information regarding the estimated channel in the channel memory. The RU may generate a beamforming weight, based on the estimated channel value stored in the channel memory, during downlink signal transmission, and may perform beamforming accordingly. However, it is difficult to accurately perform beamforming regarding the downlink channel solely based on the above-described channel estimation, and the RU may thus further perform a channel prediction function. The RU may need channel prediction information generated based on an SRS for performing the channel prediction function.

Referring to step 1115, the DU may generate channel prediction information, based on an SRS received from the UE. The channel prediction information generated by the DU may further include at least one from among an SRS signal to interference & noise ratio (SINR) value or SRS configuration information. The channel prediction information generated by the DU is illustrated in detail in FIG. 7 to FIG. 9. According to an embodiment, the channel prediction information generated by the DU may include at least one from among the index of a UE which has transmitted the SRS, SRS transmission periodicity, SRS band-related information, or SRS hopping pattern-related information. According to an embodiment, the index of a UE included in the channel prediction information generated by the DU may include the index of a UE identified such that the DU performs a channel prediction function, among UEs that has transmitted an SRS. The RU may perform channel prediction for more accurate channel estimation, based on the received SRS configuration information, and may identify only UEs appropriate for channel prediction, thereby reducing the complexity of channel prediction. In addition, the RU may apply the received SRS configuration information to new function implementation, including channel prediction, thereby utilizing the same variously.

Although not illustrated in FIG. 11, the DU may identify an RU that supports the channel prediction function. According to an embodiment, the DU may identify an RU that supports the channel prediction function, based on channel prediction capability information received from the RU. According to various embodiments of the disclosure, referring to FIG. 5, multiple RUs may be connected to one DU, and the multiple RUs may include an RU that does not support the channel prediction function. In this case, the problem of unnecessary waste of resources or the occurrence of overhead may occur in case that the DU transmits channel prediction function to all RUs connected to the DU. According to an embodiment, the DU needs to identify an RU that supports the channel prediction function, and may thus receive a message including capability information from an RU that supports the channel prediction function, thereby identifying an RU that supports the channel prediction function. However, this is only an example and is not limitative, and the operation in which the DU identifies an RU that supports the channel prediction function may not necessarily be included.

Although not illustrated in FIG. 11, in addition to identifying an RU, the DU may identify a UE supposed to perform channel prediction, based on an SRS received from multiple UEs (for example, UE selection). According to an embodiment, the DU may identify a UE expected to have a large advantage through channel prediction performed by the RU. According to an embodiment, the DU may identify a UE, based on a predetermined criterion. According to an embodiment, the DU may identify a UE, regarding which the degree of improvement in accuracy of channel estimation through channel prediction performed by the RU is equal to/larger than a specific reference value. According to an embodiment, the predetermined criterion or specific reference value may be preconfigured for the DU. According to various embodiments of the disclosure, the predetermined criterion or specific reference value may not be limited to the above-described example, and may include various criteria. However, this is only an example and is not limitative, and the operation in which the DU identifies a UE may not necessarily be included.

In step 1125, the DU may transmit generated channel prediction function to an RU. According to an embodiment, the DU may transmit generated channel prediction function to an RU that supports the channel prediction function. According to an embodiment, the DU may transmit a control message including at least one from among the index regarding the identified UE, the SRS SINR value, or SRS configuration information to the RU. The frame format of a control message transmitted by the DU is illustrated in detail in FIG. 8 and FIG. 9.

Although not illustrated in FIG. 11, according to an embodiment, the DU may transmit information associated with a parameter included in information regarding channel prediction to the RU. That is, separately from a control message including information regarding channel prediction, the DU may transmit information associated with the control message to the RU through the management plane. According to an embodiment, the information associated with the control message from the DU may be included in a message as a management-plane (M-plane) parameter of O-RAN. However, this is only an example and is not limitative, and the DU may transmit the information associated with the control message to the RU 180 through various messages including the control message of the control plane. The information associated with the control message transmitted by the DU is illustrated in detail in FIG. 10. However, this is only an example and is not limitative, and the operation in which the DU transmits information associated with the control message to the RU may not necessarily be included.

Referring to FIG. 11, the DU may perform all or some of the above-described operations, or at least one operation among a combination of some operations. However, this is not limitative, and any operations according to various embodiments of the disclosure may be added to or deleted from operations of the DU.

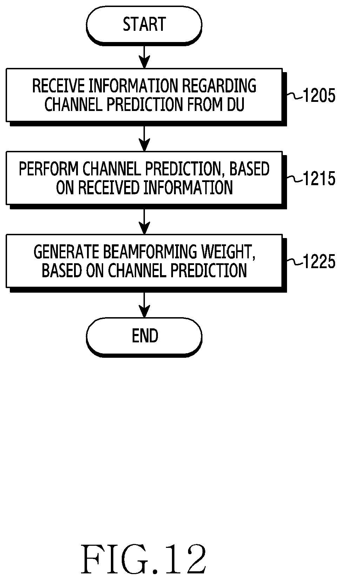

FIG. 12 illustrates a flow of operations of a radio unit (RU) which generates a beamforming weight, based on channel prediction, according to various embodiments of the disclosure. Specifically, FIG. 12 illustrates a flow of operations of an RU which receives information regarding channel prediction from a DU, performs channel prediction based on the information regarding channel prediction, and performs beamforming based on the channel prediction result. Obviously, according to various embodiments of the disclosure, FIG. 12 is only an example and is not limitative, and operations may be performed as some of the operations illustrated in FIG. 12 or as combinations of some operations. In addition, although FIG. 12 illustrates a DU and an RU, the DU and RU may refer to an O-DU and an O-RU (terms based on O-RAN specifications), respectively, according to various embodiments of the disclosure, without being limited thereto, and the above-mentioned terms may be used interchangeably.

In step 1205, the RU may receive channel prediction information from the DU. According to an embodiment, the DU may transmit generated channel prediction information to the RU which supports a channel prediction function. According to an embodiment, the RU may receive a control message including at least one from among the index regarding a UE, the SRS SINR value, or SRS configuration information from the DU. The frame format of a control message received by the RU is illustrated in detail in FIG. 8 and FIG. 9.

Although not illustrated in FIG. 12, prior to step 1205, the RU may transmit a message including channel prediction capability information to the DU. According to an embodiment, the RU may receive information regarding an SRS from the DU, and may perform a channel prediction function for more accurate channel estimation, based thereon. However, this is not limitative, and the channel prediction function according to various embodiments of the disclosure may be referred to as different names, including the above-described functions. Specifically, the channel prediction capability information may include information indicating whether the RU can perform a channel prediction function or supports the channel prediction function. According to an embodiment, the RU may transmit capability information regarding the channel prediction function to the DU through the management plane as a message (for example, management message). The capability information regarding the channel prediction function from the RU may be included in the message as a management plane (M-plane) parameter of O-RAN. According to an embodiment, capability information regarding channel prediction function support by the RU included in a management message may be indicated by a parameter such as ch-pred-supported. However, this is only an example and is not limitative, and the RU may transmit capability information to the DU through various messages including the control message of the control plane. In addition, according to various embodiments of the disclosure, the operation in which the RU transmits channel prediction capability information to the DU may not necessarily be included. According to an embodiment, the above-described channel prediction capability information may include operations illustrated in FIG. 10.

Although not illustrated in FIG. 12, according to an embodiment, the RU may receive information associated with a parameter included in information regarding channel prediction from the DU. That is, separately from a control message including information regarding channel prediction, the RU may receive information associated with the control message from the DU through the management plane. According to an embodiment, the information associated with the control message from the DU may be included in a message as a management-plane (M-plane) parameter of O-RAN. However, this is only an example and is not limitative, and the DU may transmit the information associated with the control message to the RU 180 through various messages including the control message of the control plane. The information associated with the control message transmitted by the DU is illustrated in detail in FIG. 10. However, this is only an example and is not limitative, and the operation in which the RU receives information associated with the control message from the DU may not necessarily be included.

In step 1215, the RU may perform channel prediction, based on received channel prediction information. More specifically, the RU may perform channel prediction, based on at least one of a control message including channel prediction information received from the DU, or a management message including information associated with the control message. According to an embodiment, the RU may perform channel prediction, based on a downlink channel estimation value (for example, channel matrix) stored in the channel memory and a control message including channel prediction information. The control message considered by the RU to perform channel prediction is illustrated in detail in FIG. 8 and FIG. 9. According to an embodiment, the RU may perform channel prediction regarding an SRS of a UE supposed to perform a channel prediction function identified by the DU, based on at least one of the UE ID included in the control message, SRS SNR, band SRS configuration information, SRS periodicity, and SRS hopping pattern. The management message considered by the RU to perform channel prediction is illustrated in detail in FIG. 10. Instead of simply determining a beamforming weight by using the downlink channel estimation value stored in the channel memory, the RU may perform uplink or downlink channel prediction, based on SRS information received from the DU, thereby acquiring a downlink channel which is more efficient and is close to the actual channel. However, according to various embodiments of the disclosure, this is not limitative, and the channel prediction function performed by the RU may obviously be performed further based on other names or information having similar functions.

In step 1225, the RU may determine a beamforming weight and may perform beamforming, based on the determined beamforming weight. Specifically, according to an embodiment, the RU may determine a beamforming weight, based on at least one of a channel prediction result or a channel estimation value. According to an embodiment, the RU may perform beamforming, based on the determined beamforming weight. According to an embodiment, the beamforming performed by the RU may include a normal beamforming weight determination or beamforming function based on at least one of a channel prediction result or a channel estimation value.

Although not illustrated in FIG. 12, the RU may transmit a downlink signal to the UE, based on the determined beamforming weight. According to an embodiment, the UE may transmit the same to the UE through beamforming performed based on an uplink SRS of the UE to which a downlink signal is to be transmitted.

Referring to FIG. 12, the RU may perform all or some of the above-described operations, or at least one operation among a combination of some operations. However, this is not limitative, and any operations according to various embodiments of the disclosure may be added to or deleted from operations of the RU.

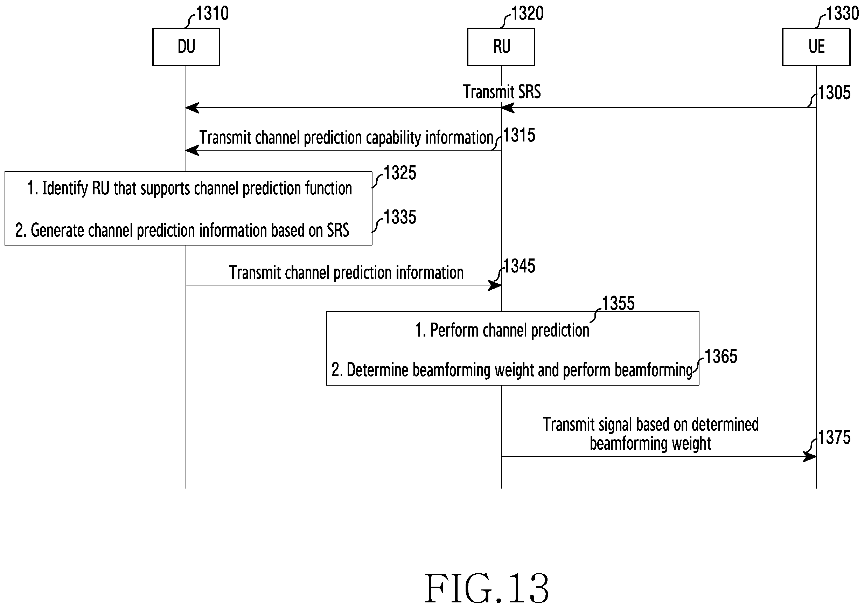

FIG. 13 illustrates a flow of signals form performing channel prediction according to various embodiments of the disclosure. Specifically, FIG. 13 illustrates a flow of signals for performing beamforming based on SRS signal transmission between a DU 1310, an RU 1320, and a UE 1330, downlink channel estimation, and performing channel prediction. Obviously, according to various embodiments of the disclosure, FIG. 13 is only an example and is not limitative, and operations may be performed as some of the operations illustrated in FIG. 13 or as combinations of some operations. In addition, although FIG. 13 illustrates a DU and an RU, the DU and RU may refer to an O-DU and an O-RU (terms based on O-RAN specifications), respectively, according to various embodiments of the disclosure, without being limited thereto, and the above-mentioned terms may be used interchangeably.

In step 1305, the UE 1330 may transmit a sounding reference signal (SRS) to the DU 1310. Although not illustrated in FIG. 13, the base station (for example, RU or DU) may transmit SRS configuration information for uplink SRS transmission to the UE 1330. According to an embodiment, the SRS configuration information received by the UE 1330 may include an indicator indicating whether the transmitted SRS is a periodic, aperiodic, or semi-persistent SRS. In addition, the SRS configuration information received by the UE 1330 may indicate whether the SRS transmission is related to a full band or related to a sub-band. As described above, according to an embodiment, the UE 1330 may transmit an uplink SRS to the DU 1310, based on SRS configuration information received from the base station.

In step 1315, the RU 1320 may transmit a message including channel prediction capability information to the DU 1310. According to an embodiment, the RU 1320 may receive information regarding an SRS from the DU 1310, and may perform a channel prediction function for more accurate channel estimation, based thereon. However, this is not limitative, and the channel prediction function according to various embodiments of the disclosure may be referred to as different names, including the above-described functions. Specifically, the channel prediction capability information may include information indicating whether the RU 1320 can perform a channel prediction function or supports the channel prediction function. According to an embodiment, the RU 1320 may transmit capability information regarding the channel prediction function to the DU 1310 through the management plane as a message (for example, management message). The capability information regarding channel prediction function support by the RU 1320 may be included in the message as a management plane (M-plane) parameter of O-RAN. According to an embodiment, capability information regarding channel prediction function support by the RU 1320 included in a management message may be indicated by a parameter such as ch-pred-supported. However, this is only an example and is not limitative, and the RU 1320 may transmit capability information to the DU 1310 through various messages including the control message of the control plane. In addition, according to various embodiments of the disclosure, the operation in which the RU 1320 transmits channel prediction capability information to the DU 1310 may not necessarily be included. According to an embodiment, the above-described channel prediction capability information may include operations illustrated in FIG. 10.

In step 1325, the DU 1310 may identify an RU 1320 which supports the channel prediction function. According to an embodiment, the DU 1310 may identify an RU 1320 that supports the channel prediction function, based on channel prediction capability information received from the RU 1320. According to various embodiments of the disclosure, referring to FIG. 5, multiple RUs 1320 may be connected to one DU 1310, and the multiple RUs 1320 may include an RU 1320 that does not support the channel prediction function. In this case, the problem of unnecessary waste of resources or the occurrence of overhead may occur in case that the DU 1310 transmits channel prediction function to all RUs 1320 connected to the DU 1310. According to an embodiment, the DU 1310 needs to identify an RU 1320 that supports the channel prediction function, and may thus receive a message including capability information from an RU 1320 that supports the channel prediction function, thereby identifying an RU 1320 that supports the channel prediction function. However, this is only an example and is not limitative, and the operation in which the DU 1310 identifies an RU 1320 that supports the channel prediction function may not necessarily be included.

Although not illustrated in FIG. 13, in addition to identifying an RU 1320, the DU 1310 may identify a UE 1330 supposed to perform channel prediction, based on an SRS received from multiple UEs 1330 (for example, UE selection). According to an embodiment, the DU 1310 may identify a UE 1330 expected to have a large advantage through channel prediction performed by the RU 1320. According to an embodiment, the DU 1310 may identify a UE 1330, based on a predetermined criterion. According to an embodiment, the DU 1310 may identify a UE 1330, regarding which the degree of improvement in accuracy of channel estimation through channel prediction performed by the RU 1320 is equal to/larger than a specific reference value. According to an embodiment, the predetermined criterion or specific reference value may be preconfigured for the DU 1310. According to various embodiments of the disclosure, the predetermined criterion or specific reference value may not be limited to the above-described example, and may include various criteria. However, this is only an example and is not limitative, and the operation in which the DU 1310 identifies a UE 1330 may not necessarily be included.

In step 1335, the DU 1310 may generate channel prediction information, based on an SRS. Although not illustrated in FIG. 13, the DU 1310 may generate information regarding downlink channel estimation, based on an SRS received from the UE 1330, prior to generating channel prediction information, and may transmit the generated information regarding channel estimation (for example, estimated channel matrix) to the RU 1320. Operations regarding channel estimation are illustrated in detail in FIG. 6. According to an embodiment, based on an assumption that channel reciprocity is satisfied in a TDD system, the DU 1310 may identify a downlink estimated channel value, based on an estimated uplink channel value, and may transmit an estimated channel value (for example, channel matrix) to the RU 1320. According to an embodiment, the RU 1320 may perform beamforming, based on the downlink estimated channel value. More specifically, in case that channel reciprocity is satisfied, bidirectional (uplink and downlink) communication channels may be considered as having identical characteristics, and the base station (including the DU 1310 or RU 1320) may thus consider that the estimated uplink channel is the estimated downlink channel. According to an embodiment, the RU 1320 may store information regarding the estimated channel in the channel memory. The RU 1320 may generate a beamforming weight, based on the estimated channel value stored in the channel memory, during downlink signal transmission, and may perform beamforming accordingly. However, it is difficult to accurately perform beamforming regarding the downlink channel solely based on the above-described channel estimation, and the RU 1320 may thus further perform a channel prediction function. The RU 1320 may need channel prediction information generated based on an SRS for performing the channel prediction function.

The DU 1310 may generate channel prediction information, based on an SRS received from the UE 1330. The channel prediction information generated by the DU 1310 may further include at least one from among an SRS signal to interference & noise ratio (SINR) value or SRS configuration information. The channel prediction information generated by the DU 1310 is illustrated in detail in FIG. 7 to FIG. 9. According to an embodiment, the channel prediction information generated by the DU 1310 may include at least one from among the index of a UE 1330 which has transmitted the SRS, SRS transmission periodicity, SRS band-related information, or SRS hopping pattern-related information. According to an embodiment, the index of a UE 1330 included in the channel prediction information generated by the DU 1310 may include the index of a UE 1330 identified such that the DU 1310 performs a channel prediction function, among UEs 1330 that has transmitted an SRS. The RU 1320 may perform channel prediction for more accurate channel estimation, based on the received SRS configuration information, and may identify only UEs 1330 appropriate for channel prediction, thereby reducing the complexity of channel prediction. In addition, the RU 1320 may apply the received SRS configuration information to new function implementation, including channel prediction, thereby utilizing the same variously.

In step 1345, the DU 1310 may transmit generated channel prediction function to the RU 1320. According to an embodiment, the DU 1310 may transmit generated channel prediction function to an RU 1320 that supports the channel prediction function. According to an embodiment, the DU 1310 may transmit a control message including at least one from among the index regarding an identified UE 1310, the SRS SINR value, or SRS configuration information to the RU 1320. The frame format of a control message transmitted by the DU 1310 is illustrated in detail in FIG. 8 and FIG. 9.

Although not illustrated in FIG. 13, according to an embodiment, the DU 1310 may transmit information associated with a parameter included in information regarding channel prediction to the RU 1320. That is, separately from a control message including information regarding channel prediction, the DU 1310 may transmit information associated with the control message to the RU 1320 through the management plane. According to an embodiment, the information associated with the control message from the DU 1310 may be included in a message as a management-plane (M-plane) parameter of O-RAN. However, this is only an example and is not limitative, and the DU 1310 may transmit the information associated with the control message to the RU 1320 through various messages including the control message of the control plane. The information associated with the control message transmitted by the DU 1310 is illustrated in detail in FIG. 10. However, this is only an example and is not limitative, and the operation in which the DU 1310 transmits information associated with the control message to the RU 1320 may not necessarily be included.

In step 1355, the RU 1320 may perform channel prediction. More specifically, the RU 1320 may perform channel prediction, based on at least one of a control message including channel prediction information received from the DU 1310, or a management message including information associated with the control message. According to an embodiment, the RU 1320 may perform channel prediction, based on a downlink channel estimation value (for example, channel matrix) stored in the channel memory and a control message including channel prediction information. The control message considered by the RU 1320 to perform channel prediction is illustrated in detail in FIG. 8 and FIG. 9. According to an embodiment, the RU 1320 may perform channel prediction regarding an SRS of a UE 1330 supposed to perform a channel prediction function identified by the DU 1310, based on at least one of the UE 1330 ID included in the control message, SRS SNR, band SRS configuration information, SRS periodicity, and SRS hopping pattern. The management message considered by the RU 1320 to perform channel prediction is illustrated in detail in FIG. 10. Instead of simply determining a beamforming weight by using the downlink channel estimation value stored in the channel memory, the RU 1320 may perform uplink or downlink channel prediction, based on SRS information received from the DU 1310, thereby acquiring a downlink channel which is more efficient and is close to the actual channel. However, according to various embodiments of the disclosure, this is not limitative, and the channel prediction function performed by the RU 1320 may obviously be performed further based on other names or information having similar functions.

In step 1365, the RU 1320 may determine a beamforming weight and may perform beamforming, based on the determined beamforming weight. Specifically, according to an embodiment, the RU 1320 may determine a beamforming weight, based on at least one of a channel prediction result or a channel estimation value. According to an embodiment, the RU 1320 may perform beamforming, based on the determined beamforming weight. According to an embodiment, the beamforming performed by the RU 1320 may include a normal beamforming weight determination or beamforming function based on at least one of a channel prediction result or a channel estimation value.

In step 1375, the RU 1320 may transmit a downlink signal to the UE 1330, based on the determined beamforming weight. According to an embodiment, the RU 1320 may transmit the same to the UE 1330 through beamforming performed based on an uplink SRS of the UE 1330 to which a downlink signal is to be transmitted.

According to various embodiments of the disclosure, a method performed by a distributed unit (DU) in a wireless communication system may include: a step of receiving a sounding reference signal (SRS) for channel estimation from a terminal; a step of generating information on a channel prediction performed by a radio unit (RU), based on the received SRS; and a step of transmitting a control message including the generated information on the channel prediction to the RU through a control plane (C-plane). The information on the channel prediction may include an index of the terminal and information on the SRS.

According to an embodiment, the method may further include: a step of receiving capability information indicating whether a channel prediction function is supported, from the RU; a step of identifying an RU configured to support a channel prediction function, based on the capability information; and a step of transmitting the generated information on the channel prediction to the identified RU configured to support a channel prediction function.

According to an embodiment, the method may further include a step of transmitting a management message including information associated with the generated information on the channel prediction to the RU through a management plane (M-plane).

According to an embodiment, the information on the SRS may include at least one of an SRS signal-to-noise ratio (SNR), band SRS configuration information, SRS periodicity, or an SRS hopping pattern.

According to an embodiment, the information associated with the information on the channel prediction may include at least one of information on an SRS hopping pattern or information on an SRS periodicity.

According to various embodiments of the disclosure, a method performed by a radio unit (RU) in a wireless communication system may include: a step of receiving a control message including information on a channel prediction generated based on a sounding reference signal (SRS) from a distributed unit (DU) through a control plane (C-plane); a step of performing channel prediction, based on the information on the channel prediction; and a step of identifying a beamforming weight associated with a terminal, based on the channel prediction result. The information on the channel prediction may include an index of the terminal and information on the SRS.

According to an embodiment, the method may further include a step of transmitting capability information indicating whether a channel prediction function is supported, to the DU.

According to an embodiment, the method may further include a step of receiving a management message including information associated with the information on the channel prediction from the DU through a management plane (M-plane).

According to an embodiment, the information on the SRS may include at least one of an SRS signal-to-noise ratio (SNR), band SRS configuration information, SRS periodicity, or an SRS hopping pattern.

According to an embodiment, the information associated with the information on the channel prediction may include at least one of information on an SRS hopping pattern or information on an SRS periodicity.

According to various embodiments of the disclosure, a distributed unit (DU) in a wireless communication system may include at least one transceiver and at least one processor functionally coupled to the at least one transceiver. The at least one processor may be configured to: receive a sounding reference signal (SRS) for channel estimation from a terminal; generate information on a channel prediction performed by a radio unit (RU), based on the received SRS; and transmit a control message including the generated information on the channel prediction to the RU through a control plane (C-plane). The information on the channel prediction may include an index of the terminal and information on the SRS.

According to an embodiment, the at least one processor may be further configured to: receive capability information indicating whether a channel prediction function is supported, from the RU; identify an RU configured to support a channel prediction function, based on the capability information; and transmit the generated information regarding channel prediction to the identified RU configured to support a channel prediction function.

According to an embodiment, the at least one processor may be further configured to transmit a management message including information associated with the generated information on the channel prediction to the RU through a management plane (M-plane).

According to an embodiment, the information on the SRS may include at least one of an SRS signal-to-noise ratio (SNR), band SRS configuration information, SRS periodicity, or an SRS hopping pattern.

According to an embodiment, the information associated with the information on the channel prediction may include at least one of information on an SRS hopping pattern or information on an SRS periodicity.

According to various embodiments of the disclosure, a radio unit (RU) in a wireless communication system may include at least one transceiver and at least one processor functionally coupled to the at least one transceiver. The at least one processor may be configured to: receive a control message including information on a channel prediction generated based on a sounding reference signal (SRS) from a distributed unit (DU) through a control plane (C-plane); perform channel prediction, based on the information on the channel prediction; and identify a beamforming weight associated with a terminal, based on the channel prediction result. The information on the channel prediction may include an index of the terminal and information on the SRS.

According to an embodiment, the at least one processor may be further configured to transmit capability information indicating whether a channel prediction function is supported, to the DU.

According to an embodiment, the at least one processor may be further configured to receive a management message including information associated with the information on the channel prediction from the DU through a management plane (M-plane).

According to an embodiment, the information on the SRS may include at least one of an SRS signal-to-noise ratio (SNR), band SRS configuration information, SRS periodicity, or an SRS hopping pattern.

According to an embodiment, the information associated with the information on the channel prediction may include at least one of information on an SRS hopping pattern or information on an SRS periodicity.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a distributed unit (DU) in a wireless communication system, the method comprising:
receiving a sounding reference signal (SRS) for channel estimation from a terminal;
generating information on a channel prediction performed by a radio unit (RU), based on the received SRS; and
transmitting a control message comprising the generated information on the channel prediction to the RU through a control plane (C-plane),
wherein the information on the channel prediction comprises an index of the terminal and information on the SRS.

2. The method of claim 1, further comprising:
receiving capability information indicating whether a channel prediction function is supported, from the RU;
identifying an RU configured to support a channel prediction function, based on the capability information; and
transmitting the generated information on the channel prediction to the identified RU configured to support a channel prediction function.

3. The method of claim 1, further comprising transmitting a management message comprising information associated with the generated information on the channel prediction to the RU through a management plane (M-plane).

4. The method of claim 1, wherein the information on the SRS comprises at least one of an SRS signal-to-noise ratio (SNR), band SRS configuration information, SRS periodicity, or an SRS hopping pattern.

5. The method of claim 3, wherein the information associated with the information on the channel prediction comprises at least one of information on an SRS hopping pattern or information on an SRS periodicity.

6. A method performed by a radio unit (RU) in a wireless communication system, the method comprising:
receiving a control message comprising information on a channel prediction generated based on a sounding reference signal (SRS) from a distributed unit (DU) through a control plane (C-plane);
performing channel prediction, based on the information on the channel prediction; and
identifying a beamforming weight associated with a terminal, based on a result of the channel prediction,
wherein the information on the channel prediction comprises an index of the terminal and information on the SRS.

7. The method of claim 6, further comprising transmitting, to the DU, capability information indicating whether a channel prediction function is supported.

8. The method of claim 6, further comprising receiving a management message comprising information associated with the information on the channel prediction from the DU through a management plane (M-plane).

9. The method of claim 6, wherein the information on the SRS comprises at least one of an SRS signal-to-noise ratio (SNR), band SRS configuration information, SRS periodicity, or an SRS hopping pattern.

10. The method of claim 8, wherein the information associated with the information on the channel prediction comprises at least one of information on an SRS hopping pattern or information on an SRS periodicity.

11. A distributed unit (DU) in a wireless communication system, the DU comprising:
at least one transceiver; and
at least one processor functionally coupled to the at least one transceiver,
wherein the at least one processor is configured to:
receive a sounding reference signal (SRS) for channel estimation from a terminal;
generate information on a channel prediction performed by a radio unit (RU), based on the received SRS; and
transmit a control message comprising the generated information on the channel prediction to the RU through a control plane (C-plane),
wherein the information on the channel prediction comprises an index of the terminal and information on the SRS.

12. The DU of claim 11, wherein the at least one processor is further configured to:
receive capability information indicating whether a channel prediction function is supported, from the RU;
identify an RU configured to support a channel prediction function, based on the capability information; and
transmit the generated information on the channel prediction to the identified RU configured to support a channel prediction function.

13. The DU of claim 11, wherein the at least one processor is further configured to transmit a management message comprising information associated with the generated information on the channel prediction to the RU through a management plane (M-plane).

14. The DU of claim 11, wherein the information on the SRS comprises at least one of an SRS signal-to-noise ratio (SNR), band SRS configuration information, SRS periodicity, or an SRS hopping pattern.

15. The DU of claim 13, wherein the information associated with the information on the channel prediction comprises at least one of information on an SRS hopping pattern or information on an SRS periodicity.
